# EUROPEAN PATENT APPLICATION

(11) **EP 2 196 991 A1**
(43) Date of publication of application: **16.06.2010**
(21) Application number: 09172288.4
(22) Date of filing: 06.10.2009
(51) Int. Cl.: G11B 5/855, H01F 1/06

(54) **L10-ordered FePt nanodot array, method of manufacturing the same and high density magnetic recording medium using the same**

(30) Priority: 11.12.2008 KR 20080125792
(71) Applicant: Korea Advanced Institute of Science and Technology, 305-701 Daejeon (KR)
(72) Inventor: Shin, Sung Chul, Daejeon 305-701 (KR); Jung, Hee-Tae, Daejeon 305-340 (KR); Ko, Hyun-Seok, Daejeon 301-150 (KR); Jung, Jin-Mi, Daejeon 305-335 (KR)
(74) Representative: Seitz, Holger Fritz Karl

(57) **Abstract**

This invention relates to a L1₀-ordered FePt nanodot array which is manufactured using capillary force lithography, to a method of manufacturing the L1₀-ordered FePt nanodot array and to a high density magnetic recording medium using the L1₀-ordered FePt nanodot array. This method includes depositing a FePt thin film on a MgO substrate, forming a thin film made of a polymer material on the deposited FePt thin film using spin coating, bringing a mold into contact with the spin coated FePt thin film, annealing the mold and a polymer pattern which are in contact with each other, cooling and separating the mold and the polymer pattern which are annealed, controlling a size of the polymer pattern through reactive ion etching, ion milling a portion of the FePt thin film uncovered with the polymer pattern thus forming a FePt nanodot array and then removing a remaining polymer layer, and annealing the FePt nanodot array.

## Description

### BACKGROUND OF THE INVENTION

### 1. Field of the Invention

The present invention relates to a L1₀-ordered FePt nanodot array, a method of manufacturing the same and a patterned high density magnetic recording medium using the same, and more particularly, to a patterned nanodot array adapted for recording media having ultrahigh density of at least terabits per square inch.

### 2. Description of the Related Art

With the acceleration of digital technology and the drastic increase in the amount of information available online, the demand for storage media having a reduced bit size, i.e. storage media having high recording density per unit area, is increasing in the market.

Examples of a non-volatile storage method may include magnetic recording, optical recording and non-volatile memory. Among them, a magnetic recording method has great price competitiveness in terms of price per bit, storage capacity and information input/output speed.

Such a magnetic recording method which records information on a magnetic film is based on the principle of changing the polarity of a predetermined portion of the magnetic film using an electromagnet called a magnetic head in accordance with digital signals of the value of 0 or 1 and reproducing recorded information from remanent magnetic states with up and down polarities.

Magnetic recording media such as the above were mainly being subjected to longitudinal recording method, and adopted perpendicular recording method for the higher recoding density these days. In order to further increase the recording density, research on patterned magnetic recording media is being conducted.

On the other hand, magnetic thin films used for the recording media to achieve high density recording should have adequate coercivity (H_{c}), saturation magnetization (Mₛ), remanent magnetization (Mᵣ), squareness (S) and coercivity squareness (S*).

The recording density over terabits per square inch is almost impossible to achieve using a continuous recording media which is currently commercially available, and nanodot-patterned magnetic recording media are being considered as a useful alternative.

Nanodot-patterned magnetic recording media store bit signals of 0 or 1 by manufacturing nano-sized dots which are then magnetized in a predetermined direction, in place of using a conventional continuous magnetic layer. The nanodot-patterned magnetic recording media are advantageous in terms of maximizing storage capacity on the condition that conventional problems including limitation of superparamagnetism and a low signal-to-noise ratio are overcome.

The nanodots are conventionally manufactured using e-beam lithography or holographic lithography. However, whenever manufacturing the nanodot-patterned recording media, e-beam lithography or holographic lithography applying expensive equipment should be used, undesirably increasing the manufacturing period and cost.

Meanwhile, a method of manufacturing the nanodot-patterned recording media using nanoimprint lithography may reduce the manufacturing cost and the manufacturing time to some degree using a mold. However, this method is problematic because a typical silicon mold should be designed using e-beam lithography to obtain a pattern on the nano scale, thus increasing the manufacturing time compared to when using injection molding and resulting in high probability of breaking the mold.

### SUMMARY OF THE INVENTION

Leading to the present invention, intensive and thorough research carried out by the present inventors was carried out for the purpose of solving the problems encountered in the related art, resulting in finding that the nanodot-patterned magnetic recording media can be manufactured using Capillary Force Lithography(CFL) under controlled process conditions.

Accordingly, the present invention intends to provide a L1₀-ordered FePt nanodot array, which is adapted for ultrahigh density patterned media.

The present invention also intends to provide a method of manufacturing the L1₀-ordered FePt nanodot array.

The present invention also intends to provide a high density magnetic recording medium using the L1₀-ordered FePt nanodot array.

An aspect of the present invention is to provide a method of manufacturing a L1₀-ordered FePt nanodot array, comprising depositing an FePt thin film on a substrate, forming a thin film comprising a polymer material on the deposited FePt thin film using spin coating, bringing a mold into contact with the spin coated FePt thin film, annealing the mold and a polymer pattern which are in contact with each other, cooling and separating the mold and the polymer pattern which have been annealed, controlling a size of the polymer pattern through reactive ion etching, ion milling a portion of the FePt thin film uncovered with the polymer pattern thus forming a FePt nanodot array and then removing a remaining polymer layer, and annealing the FePt nanodot array.

In this aspect, depositing the FePt thin film may be performed through DC magnetron sputtering.

In this aspect, depositing the FePt thin film may be performed so that the FePt thin film has a thickness of 7 - 50 nm.

In this aspect, in forming the thin film comprising the polymer material on the deposited FePt thin film using spin coating, the polymer material may be polystyrene.

In this aspect, in bringing the mold into contact with the spin coated FePt thin film, the mold may comprise polydimethylsiloxane.

In this aspect, annealing the mold and the polymer pattern may be performed at 135°C for 30 min.

In this aspect, cooling and separating the mold and the polymer pattern may be performed by cooling and separating the annealed substrate which has been subjected to annealing for a predetermined period of time so that the polymer material on the FePt thin film is sucked into an empty space of a negative pattern of the mold using capillary force thus forming the polymer pattern on the FePt thin film.

In this aspect, controlling the size of the polymer pattern may be performed by adjusting a reactive ion etching time.

In this aspect, ion milling the portion of the FePt thin film and then removing the remaining polymer layer may be performed by etching the FePt having the polymer pattern formed thereon through ion milling, thus manufacturing the FePt nanodot array, and then washing off the remaining polymer layer using a methylene chloride solution, thus removing it.

In this aspect, annealing the FePt nanodot array may be performed at 600°C for 1 hour in a high vacuum so as to form a L1₀-ordered structure.

Another aspect of the present invention provides a method of manufacturing a L1₀-ordered FePt nanodot array, comprising producing a mold comprising polymer material which is to be brought into contact with an FePt thin film so as to form a pattern, depositing the FePt thin film on a substrate, forming a thin film comprising polystyrene on the deposited FePt thin film using spin coating, bringing the mold comprising polydimethylsiloxane into contact with the spin coated FePt thin film, annealing the mold and a polymer pattern, which are in contact with each other, at 135°C for 30 min, cooling and separating the mold and the polymer pattern which have been annealed, controlling a size of the polymer pattern through reactive ion etching, ion milling a portion of the FePt thin film uncovered with the polymer pattern thus forming a FePt nanodot array and then removing a remaining polymer layer, and annealing the FePt nanodot array at 600°C for 1 hour in a high vacuum so as to form an L1₀-ordered structure.

A further aspect of the present invention provides a magnetic recording medium comprising an information recording unit for recording information and an information storage unit for magnetically recording the information using the information recording unit, wherein the information storage unit may comprise the L1₀-ordered FePt nanodot array.

### BRIEF DESCRIPTION OF THE DRAWINGS

FIG. 1 is a flowchart showing a process of manufacturing a patterned FePt nanodot array according to an embodiment of the present invention;
FIG. 2 is a graph showing a relationship between the RIE time and the FePt nanodot size in the process of manufacturing the patterned FePt nanodot array according to the present invention;
FIGS. 3A and 3B are AFM images of patterned FePt nanodots having a dot size of 110 nm at intervals of 150 nm and 300 nm respectively manufactured according to the embodiment of the present invention, and FIG. 3C is an AFM image of patterned FePt nanodots having a dot size of 70 nm manufactured according to the embodiment of the present invention, in which the size of a white line amounts to 1 µm;
FIG. 4 is a XRD graph of the patterned FePt nanodots depending on changes in annealing temperature and dot size in the process of manufacturing the patterned FePt nanodot array according to the present invention;
FIG. 5 is a graph showing a relationship between the dot size and the coercivity in the process of manufacturing the patterned FePt nanodot array according to the present invention; and
FIGS. 6A to 6C are MFM images of the patterned FePt nanodots manufactured using the process of manufacturing the patterned FePt nanodot array according to the present invention depending on the annealing temperature, in which the size of a white line amounts to 1 µm.

### DETAILED DESCRIPTION OF THE INVENTION

Hereinafter, a detailed description will be given of embodiments of the present invention with reference to the accompanying drawings. Throughout the drawings, the same reference numerals refer to the same or similar elements. In the description, the detailed descriptions of known techniques pertaining to the present invention are omitted so as not to make the characteristics of the invention unclear.

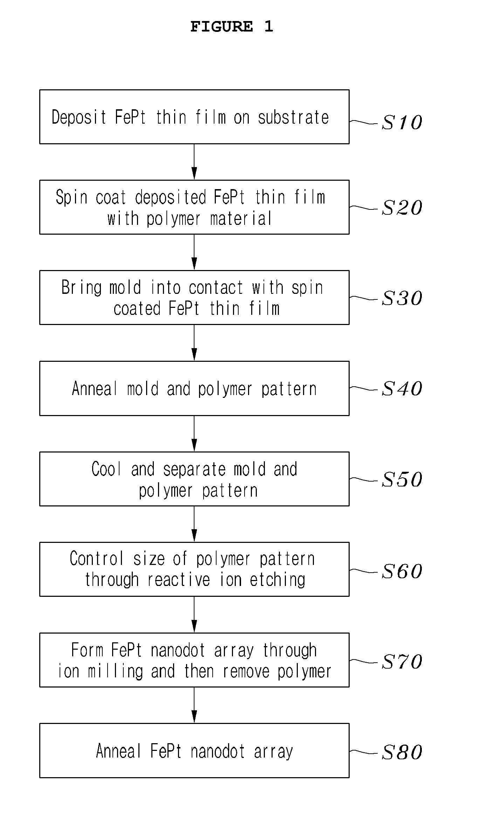

FIG. 1 is a flowchart showing a process of manufacturing a patterned FePt nanodot array according to an embodiment of the present invention. As shown in FIG. 1, the method of manufacturing the patterned FePt nanodot array according to the present invention includes S10 to S80, which are stepwisely specified below.

S10 is a process of depositing a FePt thin film on a MgO substrate.

The FePt thin film may be deposited through sputtering. In the present invention, DC magnetron sputtering is employed.

Alternatively, in lieu of DC magnetron sputtering, a deposition method exemplified by MBE (Molecular Beam Epitaxy) may be used. The MBE method is performed in an ultrahigh vacuum and thus advantageously improves the quality (crystallinity) of a sample, but is disadvantageous in terms of mass production and is unsuitable for the co-deposition of two or more materials at the same time. Hence, in the present invention, the deposition is carried out using DC magnetron sputtering.

The thickness of the FePt thin film is set to 7 - 50 nm. It was experimentally confirmed that the formation of a L1₀ ordered structure is easy and the shape of the pattern is uniform when the thickness of the FePt thin film is set to 50 nm or less.

Although not shown in FIG. 1, before deposition of the FePt thin film, producing a mold which is to be brought into contact with the FePt thin film to form a pattern should be carried out first. The mold for forming the pattern is preferably made of a polymer material. This is because the polymer material facilitates the formation of the pattern using capillary force after an annealing process and may also be easily removed after formation of the pattern.

An example of the polymer material may include PDMS (polydimethylsiloxane) which is a polymer elastomer. Alternatively, in lieu of the above type of polymer mold, an inorganic mold made of SiO₂ may be used.

The PDMS mold should have a shape complementary to that of the pattern to be formed. To this end, a pattern formed of an inorganic material is formed on a master plate, treated with O₂ plasma, subjected to silane interface treatment using OTS (octadecyltrichlorosilane), coated with PDMS which is not polymerized, allowed to stand for a predetermined period of time, and then washed off using anhydrous toluene.

Next, S20 is a process of spin coating the deposited FePt thin film with a polymer material. Specifically, after the deposition of the FePt thin film with a desired thickness on the substrate, the polymer material is formed into a thin film on the FePt thin film using spin coating. As such, an example of the polymer material which is applied on the FePt thin film through spin coating may include PS (polystyrene).

The polymer thin film formed on the FePt thin film through spin coating becomes flowable due to heat in a subsequent annealing process and should be resistant to etching of the substrate because it patterns the FePt thin film in a subsequent etching process.

Next, S30 is a process of bringing the mold into contact with the spin coated FePt thin film.

Specifically, the PDMS mold which was previously produced is brought into contact with the FePt thin film spin coated with the polymer material as above because the PDMS is typically flexible and thus spontaneously caused uniform contact, which is the most important in the contact procedure.

Next, S40 is a process of annealing the PDMS mold and the polymer pattern at 135°C for 30 min. Specifically, the PDMS mold is annealed at a predetermined temperature in a state of being in contact with the spin coated FePt thin film. This annealing process in S40 functions in a manner such that the polymer thin film formed on the FePt thin film through spin coating becomes flowable due to heat and is thus sucked into the negative pattern of the PDMS mold in contact therewith using capillary force.

Next, S50 is a process of cooling and separating the annealed PDMS mold and polymer pattern. Specifically, the annealed substrate subjected to annealing for a predetermined period of time so that the polymer material behaving as a liquid on the FePt thin film is sucked into the empty space of the negative pattern of the polymer mold using capillary force thus forming the polymer pattern on the FePt thin film is cooled and separated.

Next, S60 is a process of controlling the size of the polymer pattern through RIE (Reactive Ion Etching) using the pattern formed on the FePt thin film as an etching resistance mask through ion etching. As such, the dot size may be controlled depending on change in the etching time.

Next, S70 is a process of ion milling a portion of the FePt thin film uncovered with the polymer pattern and removing the remaining polymer layer. Specifically, after formation of the polymer pattern having an appropriate size, FePt is etched through ion milling, thus obtaining the FePt nanodot array having a desired size.

The remaining polymer layer is washed off using a methylene chloride solution and thereby completely removed.

Next, S80 is a process of annealing the FePt nanodot array having a desired size in a high vacuum at 600°C for 1 hour so as to form a L1₀-ordered structure.

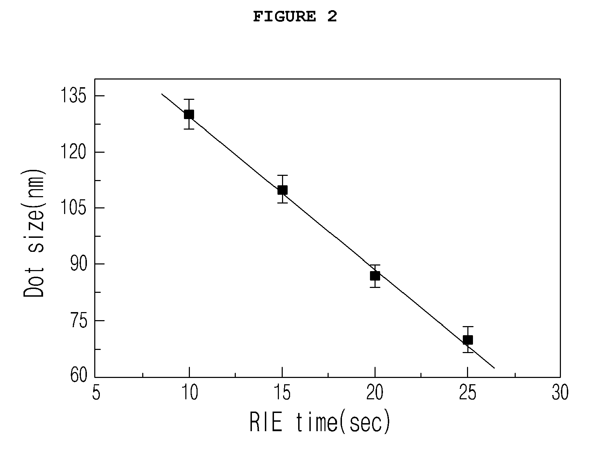

FIG. 2 is a graph showing a relationship between the RIE time and the FePt nanodot size in the process of manufacturing the patterned FePt nanodot array according to the present invention.

As is apparent from FIG. 2, as the RIE time is adjusted from 15 sec to 25 sec, the dot size may be controlled from 110 nm to 70 nm. After the formation of the pattern using the PDMS mold, the FePt thin film has thereon a positive polymer pattern obtained by filling the negative pattern of the mold and the polymer layer remaining in a thin film form through contact with the positive pattern of the mold. As the RIE time is increased, the thin polymer layer is first removed, and then the size and shape of the positive polymer pattern may vary. Hence, the dot size may be controlled depending on the reaction time.

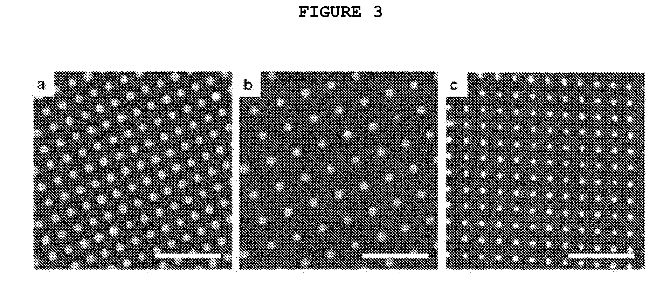

The uniformity of the nanodot array thus formed may be confirmed in FIGS. 3A to 3C.

Specifically, FIGS. 3A and 3B are AFM images of the patterned FePt nanodots having a dot size of 110 nm at intervals of 150 nm and 300 nm respectively manufactured according to the embodiment of the present invention, and FIG. 3C is an AFM image of the patterned FePt nanodots having a dot size of 70 nm. In the drawings, the size of a white line amounts to 1 µm.

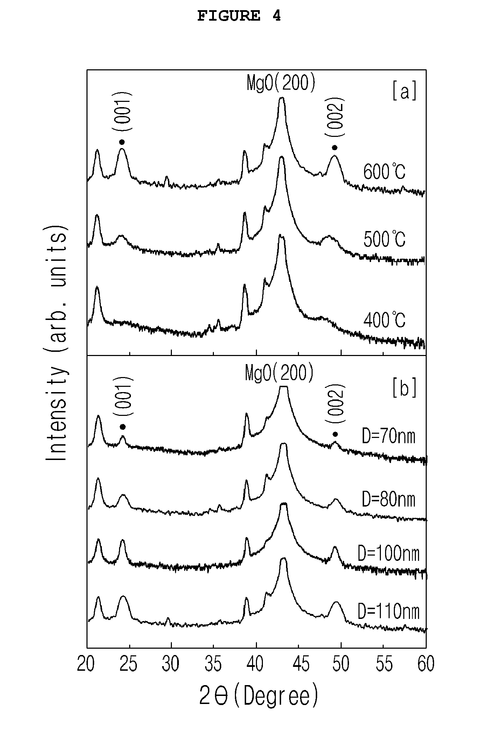

FIG. 4 is an XRD graph of patterned FePt nanodots depending on changes in annealing temperature and dot size in the process of manufacturing the patterned FePt nanodot array according to the present invention.

The relationship between the annealing temperature and the properties of the patterned FePt nanodots is illustrated in FIG. 4. As is apparent from this drawing, the L1₀-ordered structure begins to be formed from 500°C, and is completely formed at 600°C or higher.

In FIG. 4, the degree of ordering can be determined from an ordering parameter (S) which is a ratio of (001) peak to (002) peak. In the case of the FePt dots annealed at 600°C, the ordering parameter is 0.87 which is evaluated to be almost completely ordered. Even when the dot size is reduced to 70 nm, the magnitude of the ordering parameter can be seen to be maintained. Thus, when the dot size is reduced to 100 nm or less, the L1₀-ordered structure can be formed well.

Below, the relationship between the annealing temperature and the magnetic properties of the nanodots is described. The fact that the ordered structure varies depending on the annealing temperature can be confirmed from the XRD results. The ordered structure of FePt has a direct influence on perpendicular magnetic anisotropy of FePt. Specifically, the large perpendicular anisotropic energy of FePt is generated from a large L1₀-ordered structure. Thus, perpendicular magnetic anisotropy varies depending on the annealing temperature, and magnetic properties for example coercivity (Hx = 2 Ku/Ms) may be affected by the perpendicular magnetic anisotropy which varies as described.

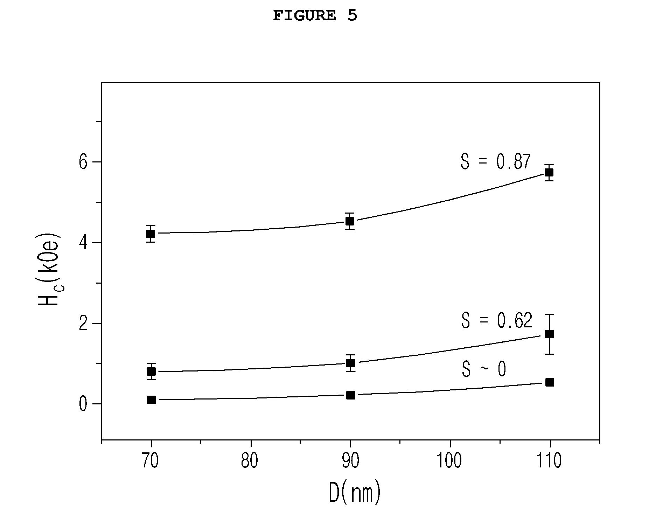

FIG. 5 is a graph showing a relationship between the dot size and the coercivity in the process of manufacturing the patterned FePt nanodot array according to the present invention.

In the case of the dot array annealed at 600°C, it may exhibit coercivity of 4 kOe or more. This coercivity value is enough to maintain the independent recording state of respective dots without being affected by a magnetostatic field generated from adjacent dots.

Also, the magnetic domains of the dots may represent various configurations. For example, there are cases having the same magnetization direction or antiparallel magnetization directions, or a concentric circular configuration. Among such various magnetic domain configurations, magnetic domains which are arranged in one magnetization direction are regarded as preferable in terms of magnetic recording. This is because they must be arranged in only one direction among upward direction and downward direction to avoid. The domain state with zero net magnetization which can not represent the meaning of +1 or-1.

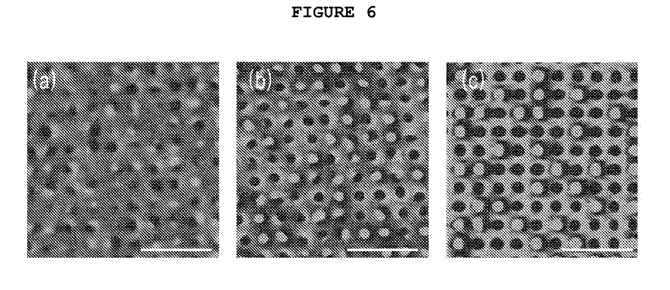

FIGS. 6A to 6C are MFM images of the patterned FePt nanodots manufactured using the process of manufacturing the patterned FePt nanodot array according to the present invention.

As shown in the MFM images of FIGS. 6A to 6C, the shape of the magnetic domains may vary depending on the annealing temperature. Specifically, as the annealing temperature is increased, single magnetic domains may result. The ordered FePt nanodot array annealed at 600°C can be seen to have the magnetic domains suitable for magnetic recording.

As mentioned above, in the method of manufacturing the L1₀-ordered FePt nanodot array according to the present invention, FePt has large perpendicular magnetic anisotropic energy and thus exhibits thermal stability superior to other materials. Specifically, FePt is a material able to overcome thermal instability occurring as a result of reducing the dot size and has superior magnetic properties.

As described hereinbefore, the present invention provides a L1₀-ordered FePt nanodot array, a method of manufacturing the same and a high density magnetic recording medium using the same. According to the present invention, the nanodot array is manufactured using CFL, thus obtaining an ultrahigh density magnetic recording medium.

Also, a magnetic thin film is formed using FePt, thus obtaining the magnetic recording medium having high recording stability even when subjected to heat and magnetic energy.

Also, the nanodot array which is ordered over a large range can be industrially mass produced and can be used to manufacture the magnetic recording medium.

Although the embodiments of the present invention regarding the method of manufacturing the L1₀-ordered FePt nanodot array have been disclosed for illustrative purposes, those skilled in the art will appreciate that various modifications, additions and substitutions are possible, without departing from the scope and spirit of the invention as disclosed in the accompanying claims.

## Claims

1. A method of manufacturing a L1₀-ordered FePt nanodot array, comprising:
depositing an FePt thin film on a MgO substrate;
forming a thin film comprising a polymer material on the deposited FePt thin film using spin coating;
bringing a mold into contact with the spin coated FePt thin film;
annealing the mold and a polymer pattern which are in contact with each other;
cooling and separating the mold and the polymer pattern which have been annealed;
controlling a size of the polymer pattern through reactive ion etching;
ion milling a portion of the FePt thin film uncovered with the polymer pattern thus forming a FePt nanodot array, and then removing a remaining polymer layer; and
annealing the FePt nanodot array.

2. The method as set forth in claim 1, wherein the depositing the FePt thin film is performed through DC magnetron sputtering.

3. The method as set forth in claim 1, wherein the depositing the FePt thin film is performed so that the FePt thin film has a thickness of 7 - 50 nm.

4. The method as set forth in claim 1, wherein, in forming the thin film comprising the polymer material on the deposited FePt thin film using spin coating, the polymer material is polystyrene.

5. The method as set forth in claim 1, wherein, in bringing the mold into contact with the spin coated FePt thin film, the mold comprises polydimethylsiloxane.

6. The method as set forth in claim 1, wherein the annealing the mold and the polymer pattern is performed at 135°C for 30 min.

7. The method as set forth in claim 1, wherein cooling and separating the mold and the polymer pattern are performed by cooling and separating the annealed substrate which has been subjected to annealing for a predetermined period of time so that the polymer material on the FePt thin film is sucked into an empty space of a negative pattern of the mold using capillary force thus forming the polymer pattern on the FePt thin film.

8. The method as set forth in claim 1, wherein the controlling the size of the polymer pattern is performed by adjusting a reactive ion etching time.

9. The method as set forth in claim 1, wherein the ion milling the portion of the FePt thin film and then removing the remaining polymer layer are performed by etching the FePt having the polymer pattern formed thereon through ion milling, thus manufacturing the FePt nanodot array, and then washing off the remaining polymer layer using a methylene chloride solution, thus removing it.

10. The method as set forth in claim 1, wherein the annealing the FePt nanodot array is performed at 600°C for 1 hour in a high vacuum so as to form an L1₀-ordered structure.

11. A method of manufacturing a L1₀-ordered FePt nanodot array, comprising:
producing a mold comprising a polymer material which is to be brought into contact with the FePt thin film so as to form a pattern;
depositing the FePt thin film on a MgO substrate;
forming a thin film comprising polystyrene on the deposited FePt thin film using spin coating;
bringing the mold comprising polydimethylsiloxane into contact with the spin coated FePt thin film;
annealing the mold and a polymer pattern, which are in contact with each other, at 135°C for 30 min;
cooling and separating the mold and the polymer pattern which have been annealed;
controlling a size of the polymer pattern through reactive ion etching;
ion milling a portion of the FePt thin film uncovered with the polymer pattern thus forming a FePt nanodot array, and then removing a remaining polymer layer; and
annealing the FePt nanodot array at 600°C for 1 hour in a high vacuum so as to form a L1₀-ordered structure.

12. A L1₀-ordered FePt nanodot array manufactured through the method of any one of claims 1 to 10.

13. A high density magnetic recording medium comprising an information recording unit for recording information and an information storage unit for magnetically recording the information using the information recording unit, wherein the information storage unit comprises the L1₀-ordered FePt nanodot array of claim 12.
